Europäisches Patentamt

European Patent Office

Office européen des brevets

(19)

(11) **EP 1 472 890 B1**

(12) **EUROPÄISCHE PATENTSCHRIFT**

(45) Veröffentlichungstag und Bekanntmachung des Hinweises auf die Patenterteilung:
**29.03.2006 Patentblatt 2006/13**

(21) Anmeldenummer: **03708070.2**

(22) Anmeldetag: **23.01.2003**

(51) Int Cl.:
*H04N 17/00* (2006.01)   *H04N 5/217* (2006.01)

(86) Internationale Anmeldenummer:
**PCT/EP2003/000637**

(87) Internationale Veröffentlichungsnummer:
**WO 2003/067900 (14.08.2003 Gazette 2003/33)**

(54) **VERFAHREN ZUM ÜBERPRÜFEN DER FUNKTIONSSICHERHEIT EINES BILDSENSORS SOWIE VORRICHTUNG MIT EINEM BILDSENSOR**

METHOD FOR VERIFYING THE FUNCTIONAL RELIABILITY OF AN IMAGE SENSOR AND DEVICE COMPRISING AN IMAGE SENSOR

PROCEDE DESTINE A VERIFIER LA SECURITE FONCTIONNELLE D'UN CAPTEUR D'IMAGES AINSI QUE DISPOSITIF DOTE D'UN CAPTEUR D'IMAGES

(84) Benannte Vertragsstaaten:
**AT BE BG CH CY CZ DE DK EE ES FI FR GB GR HU IE IT LI LU MC NL PT SE SI SK TR**

(30) Priorität: **04.02.2002 DE 10205691**

(43) Veröffentlichungstag der Anmeldung:
**03.11.2004 Patentblatt 2004/45**

(73) Patentinhaber: **Pilz GmbH & Co. KG**
**73760 Ostfildern (DE)**

(72) Erfinder:
• FUCHS, Oliver
**73732 Esslingen (DE)**
• BITTNER, Dieter
**73326 Deggingen (DE)**
• WENDLER, Martin
**70599 Stutgart (DE)**

• DÖTTLING, Dietmar
**70771 Leinfelden-Echterdingen (DE)**

(74) Vertreter: **Duhme, Torsten et al**
**Witte, Weller & Partner,**
**Patentanwälte,**
**Postfach 10 54 62**
**70047 Stuttgart (DE)**

(56) Entgegenhaltungen:
**EP-A1- 0 458 030       US-A- 4 602 291**

• **PATENT ABSTRACTS OF JAPAN vol. 013, no. 058 (E-714), 9. Februar 1989 (1989-02-09) & JP 63 248289 A (FUJITSU LTD;OTHERS: 01), 14. Oktober 1988 (1988-10-14)**
• **PATENT ABSTRACTS OF JAPAN vol. 2000, no. 10, 17. November 2000 (2000-11-17) & JP 2000 209506 A (TOSHIBA CORP), 28. Juli 2000 (2000-07-28)**

**EP 1 472 890 B1**

**Beschreibung**

Die vorliegende Erfindung betrifft ein Verfahren zum Überprüfen der Funktionssicherheit eines Bildsensors, der eine Vielzahl von lichtempfindlichen Bildpunkten aufweist, wobei Grauwerte von zumindest einem lichtempfindlichen Bildpunkt ausgelesen werden.

Die Erfindung betrifft ferner eine Vorrichtung, insbesondere eine elektronische Kamera, mit einem Bildsensor, der eine Vielzahl von lichtempfindlichen Bildpunkten aufweist, ferner mit einer Ausgabeeinheit, die Grauwerte der lichtempfindlichen Bildpunkte zum Auslesen bereitstellt, und mit einer Überwachungseinheit zum Überprüfen der Funktionssicherheit des Bildsensors, wobei die Überwachungseinheit zumindest einen Speicher zum Abspeichern von Referenzwerten beinhaltet.

Ein solches Verfahren und eine solche Vorrichtung sind beispielsweise aus der DE 100 17 333 A1 bekannt.

In dieser Druckschrift ist eine Schutzvorrichtung zum Absichern eines Gefahrenbereichs sowie ein Verfahren zum Überprüfen der Funktionssicherheit der Schutzvorrichtung beschrieben. Die Schutzvorrichtung beinhaltet eine elektronische Kamera, mit der beispielsweise der Gefahrenbereich einer automatisiert arbeitenden Maschine aufgenommen werden kann. Das aufgenommene Bild wird mit Mitteln der elektronischen Bildverarbeitung ausgewertet, um zu überprüfen, ob sich beispielsweise eine Person in dem Gefahrenbereich aufhält. Gegebenenfalls wird die Maschine abgeschaltet.

Um die mit einer solchen Schutzvorrichtung gewünschte Absicherung zu erreichen, ist es erforderlich, die Funktionssicherheit der Schutzvorrichtung selbst zu gewährleisten. Es muß ausgeschlossen sein, daß die Schutzvorrichtung beispielsweise gerade dann versagt, wenn eine Person den Gefahrenbereich betritt. Aus diesem Grund ist es erforderlich, die Funktionssicherheit der in der Schutzvorrichtung verwendeten Kamera regelmäßig zu überprüfen.

Gemäß der DE 100 17 333 A1 wird zum Überprüfen der Funktionssicherheit des Bildsensors das von der Kamera aufgenommene Objektbild verändert. Das veränderte Objektbild wird dann mit einem Referenzbild verglichen, das die erwarteten Veränderungen beinhaltet. Weicht das veränderte Objektbild von dem Referenzbild ab, wird auf einen Funktionsfehler des Bildsensors geschlossen. Mit diesem Verfahren ist es möglich, eine Schutzvorrichtung zu realisieren, die unter anderem die hohen Sicherheitsanforderungen der Kategorien 3 und 4 der Europäischen Norm EN 954-1 erfüllt. Insbesondere ist es möglich, eine zeitlich lückenlose Überwachung des Gefahrenbereichs sowie eine Überprüfung einzelner Bildpunkte (Pixel) zu erreichen. Die gezielte Veränderung des Objektbildes erfordert jedoch mechanische und/oder optische Komponenten, die den Strahlengang des einfallenden Lichts beeinflussen. Hierdurch wird die bekannte Schutzvorrichtung relativ teuer.

Aus der EP 0 902 402 A2 sind ein Verfahren sowie eine Vorrichtung zur optischen Überwachung eines Raumbereichs bekannt. Um die Funktionssicherheit dieser Vorrichtung zu überprüfen, wird eine Kamera mit einer Leuchtdiode geblendet. Das dann von der Kamera aufgenommene Bildmuster wird mit einem abgespeicherten Referenzmuster verglichen. Dieses Verfahren besitzt jedoch den Nachteil, daß die Kamera während der Durchführung des Funktionstests "blind" ist, was eine zeitlich lückenlose Überwachung unmöglich macht. Außerdem kann mit diesem Verfahren nicht zuverlässig überprüft werden, ob einzelne Bildpunkte oder Bereiche des verwendeten Bildsensors fehlerhaft sind.

In der EP 0 179 252 A2 ist eine Schutzvorrichtung mit einer Kamera beschrieben, die auf der optischen Auswertung von Farbunterschieden beruht. Eine zu schützende Bedienperson trägt eine Bekleidung, die sich farblich von der gefährlichen Maschine unterscheidet. Um die Funktionssicherheit der für die Überwachung verwendeten Kamera zu überprüfen, wird das Vorhandensein eines Farbmusters ständig überprüft. Auch mit diesen Verfahren ist es jedoch nicht möglich, gezielt einzelne Bildpunkte oder Bereiche des in der Kamera verwendeten Bildsensors zu überprüfen.

Aus JP 63-248289 ist es bekannt, eine Warnung auszugeben, wenn die Höhe des Dunkelstroms bei einem CCD-Bildsensor einen bestimmten Wert übersteigt. Der CCD-Bildsensor kann dann ausgetauscht werden oder die Ursache des hohen Dunkelstroms kann untersucht werden.

Aus EP 0 458 030 A1 ist es bekannt, bei einem CCD-Bildsensor auf ein schlechtes oder defektes Pixel zu schließen, wenn die Höhe des Dunkelstroms einen gewissen Schwellenwert übersteigt. Wenn ein solches Pixel als schlecht oder defekt eingestuft wurde, wird die von diesem Pixel gelieferte Bildinformation verworfen oder durch einen anderen Wert ersetzt.

Es ist eine Aufgabe der vorliegenden Erfindung, ein alternatives Verfahren anzugeben, mit dem die Funktionssicherheit eines Bildsensors zuverlässig überprüft werden kann. Es ist des weiteren eine Aufgabe, eine entsprechende Vorrichtung, insbesondere eine elektronische Kamera, anzugeben, deren Funktionssicherheit zuverlässig und lückenlos überprüfbar ist.

Diese Aufgabe wird mit einem Verfahren der eingangs genannten Art gelöst, das folgende Schritte beinhaltet:

- Bestimmen eines aktuellen Rauschmaßes der Grauwerte des zumindest einen Bildpunktes,

- Bereitstellen eines Referenzrauschmaßes für den zumindest einen Bildpunkt, und

- Vergleichen des aktuellen Rauschmaßes und des Referenzrauschmaßes,

- wobei das aktuelle Rauschmaß so bestimmt wird, daß es sich in Abhängigkeit von einer Lichtintensität verändert,

- wobei das Referenzrauschmaß ein Dunkelrauschmaß ist, und

- wobei ein Funktionsfehler angenommen wird, wenn das aktuelle Rauschmaß das Dunkelrauschmaß trotz einer vorhandenen Grundhelligkeit nicht übersteigt.

Die Aufgabe wird des weiteren durch eine Vorrichtung der eingangs genannten Art gelöst, bei der in dem Speicher zumindest ein Dunkelrauschmaß für zumindest einen Bildpunkt als Referenzrauschmaß abgespeichert ist und wobei die Überwachungseinheit einen Rauschbestimmungsteil sowie einen Vergleicher aufweist, wobei mit dem Rauschbestimmungsteil ein aktuelles Rauschmaß der Grauwert des zumindest einen Bildpunktes so bestimmbar ist, daß es sich in Abhängigkeit von einer Lichtintensität verändert, wobei mit dem Vergleicher das aktuelle Rauschmaß und das Dunkelrauschmaß vergleichbar sind, und wobei ein Funktionsfehler angenommen wird, wenn das aktuelle Rauschmaß das Dunkelrauschmaß trotz einer vorhandenen Grundhelligkeit nicht übersteigt.

Ein Grundgedanke der vorliegenden Erfindung beruht auf der überraschenden Erkenntnis, daß ein defekter Bildpunkt eines Bildsensors ein anderes Rauschverhalten aufweist als ein funktionsfähiger Bildpunkt. Als Rauschen werden dabei die statistischen Schwankungen der Grauwerte der einzelnen Bildpunkte bezeichnet, die sich selbst bei konstanten Umgebungsbedingungen einstellen. Diese statistischen Schwankungen sind auf verschiedene Ursachen zurückzuführen, u.a. auf das sogenannte Photonenrauschen, auf das sogenannte Dunkelrauschen und auf das sogenannte Ortsrauschen. Photonenrauschen beruht auf der quantenphysikalischen Eigenschaft des Lichts. Anschaulich ergeben sich Signalschwankungen hierbei, weil zu verschiedenen Zeitpunkten unterschiedlich viele "Lichtteilchen" auf die Bildpunkte auftreffen. Photonenrauschen steigt mit zunehmender Intensität des einfallenden Lichts. Bei hohen Lichtintensitäten dominiert das Photonenrauschen und der gesamte Rauschpegel ist dann annähernd proportional zur Wurzel der Lichtintensität.

Dunkelrauschen beschreibt statistische Prozesse bei der Umwandlung der auf den Bildsensor einfallenden elektromagnetischen Energie in elektrische Signale. Dunkelrauschen wird u.a. durch Inhomogenitäten beim Ladungsträgertransport hervorgerufen. Des weiteren tragen in den Bildsensor integrierte oder mit diesem verknüpfte elektronische Bauteile zum Rauschpegel bei. Charakteristisch für das Dunkelrauschen ist die Unabhängigkeit von der Lichtintensität. Dunkelrauschen ist jedoch abhängig von der Umgebungstemperatur.

Ortsrauschen (fixed pattern noise) resultiert aus Inhomogenitäten der einzelnen Bildpunkte eines Bildsensors. Ursache hierfür sind vor allem Fertigungstoleranzen. Ortsrauschen hat keinen Einfluß auf das Rauschverhalten eines einzelnen Bildpunktes, es tritt nur beim Vergleich mit anderen Bildpunkten in Erscheinung.

Das erfindungsgemäße Verfahren vergleicht anhand des aktuellen Rauschmaßes das aktuelle Rauschverhalten des zu überprüfenden Bildpunktes mit einer Erwartungshaltung, die durch das Referenzrauschmaß charakterisiert ist. Das Referenzrauschmaß spiegelt dabei das Rauschverhalten eines intakten Bildpunktes wider. Der Vergleich findet anhand eines vorgegebenen Kriteriums statt, das abhängig von den im Einzelfall definierten Rauschmaßen beispielsweise ein Größenvergleich oder ein Identitätsvergleich sein kann. Wenn das aktuelle Rauschmaß für den überprüften Bildpunkt ein anderes Rauschverhalten offenbart als durch das Referenzrauschmaß charakterisiert ist, wird ein Funktionsfehler angenommen.

Gemäß der Erfindung spiegelt das aktuelle Rauschmaß vor allem die Stärke des Photonenrauschens wider. Das Dunkelrauschmaß gibt den Rauschpegel des Bildpunktes bei Dunkelheit an. Da das Photonenrauschen zu einem lichtabhängigen Anstieg des Rauschens führt, läßt sich durch Größenvergleich dieser beiden Rauschmaße besonders einfach feststellen, ob ein Bildpunkt die gewünschte Sensitivität für einfallendes Licht besitzt. Ein Funktionsfehler wird angenommen, wenn das aktuelle Rauschmaß das Dunkelrauschmaß trotz einer vorhandenen Grundhelligkeit nicht übersteigt. Da das Licht "von außen" auf den Bildsensor auftrifft, wird hierbei in einem einzigen Schritt die gesamte Signalverarbeitungskette überprüft, die auch ein aufgenommenes Bildsignal durchläuft. Diese Ausgestaltung ermöglicht daher eine effiziente und vollständige Überprüfung des gesamten Bildaufnahmeweges.

Das erfindungsgemäße Verfahren erfordert keine zusätzlichen mechanischen oder optischen Komponenten, die auf das aufgenommene Bild einwirken. Das Verfahren läßt sich allein auf der Basis der ohnehin vorhandenen Grauwerte ausführen. Dementsprechend kann eine erfindungsgemäße Vorrichtung sehr kostengünstig realisiert werden, insbesondere bei großen Stückzahlen. Darüber hinaus ermöglicht das erfindungsgemäße Verfahren eine lückenlose Überwachung, da die Überprüfung der Funktionssicherheit keine externen Testsignale erfordert. Der Bildsensor wird somit nicht "blind".

Die genannte Aufgabe ist daher vollständig gelöst.

In einer Ausgestaltung der Erfindung wird das aktuelle Rauschmaß durch eine statistische Auswertung einer Mehrzahl aufeinanderfolgend ausgelesener Grauwerte bestimmt.

# EP 1 472 890 B1

Alternativ ist grundsätzlich auch eine rein meßtechnische Bestimmung von Rauschpegeln möglich. Die hier bevorzugte Bestimmung des aktuellen Rauschmaßes ist jedoch sehr einfach und kostengünstig realisierbar, da eine gattungsgemäße Kamera häufig bereits einen Mikroprozessor oder Mikrocontroller besitzt, mit dem eine statistische Auswertung von Daten durchführbar ist. Die erfindungsgemäße Vorrichtung kommt daher ohne zusätzliche Meßmittel aus. Als aktuelles Rauschmaß kann insbesondere die Varianz der Grauwerte eines Bildpunktes, die mittlere Abweichung eines aktuellen Grauwertes von dem vorangegangenen Grauwert oder die Differenz der Extremwerte aller Grauwerte eines Bildpunktes innerhalb eines Meßzyklus dienen.

In einer weiteren Ausgestaltung werden das aktuelle Rauschmaß und das Referenzrauschmaß auf jeweils gleiche Weise bestimmt.

Dies ermöglicht einen besonders einfachen Vergleich der beiden Größen. Dementsprechend ist der Realisierungsaufwand gering, und der Vergleich kann sehr schnell durchgeführt werden.

In einer weiteren Ausgestaltung werden das aktuelle Rauschmaß und das Referenzrauschmaß in Abhängigkeit von einer aktuellen Umgebungstemperatur miteinander verglichen.

Dies ermöglicht eine Verbesserung der Genauigkeit und Zuverlässigkeit, da Veränderungen aufgrund der Temperaturabhängigkeit des Dunkelrauschens berücksichtigt und korrigiert werden können.

In einer weiteren Ausgestaltung wird das aktuelle Rauschmaß für den zumindest einen Bildpunkt als Absolutwert bestimmt.

Hiernach wird das aktuelle Rauschmaß für jeden Bildpunkt isoliert, d.h. unabhängig von anderen Bildpunkten, bestimmt. Alternativ dazu ist es grundsätzlich auch möglich, das Rauschmaß relativ zu dem Rauschpegel eines oder mehrerer anderer Bildpunktes zu bestimmen. Die bevorzugte Maßnahme erleichtert die Aufdeckung sogenannter "Stuck at "-Fehler, bei denen die Grauwerte eines Bildpunktes unabhängig vom Lichteinfall auf einem konstanten Wert "kleben". Bevorzugt wird hier als Absolutwert die Varianz oder die durchschnittliche Abweichung eines aktuellen Grauwertes von seinem Vorgängerwert herangezogen.

In einer weiteren Ausgestaltung werden das aktuelle Rauschmaß und das Referenzrauschmaß in bezug auf jeweils identische Bildpunkte miteinander verglichen.

Dies ermöglicht auf einfache Weise ein gezieltes Aufdecken von "Stuck at"-Fehlern in einzelnen Bildpunkten.

In einer weiteren Ausgestaltung wird das aktuelle Rauschmaß von einem Verhältnis der Grauwerte von zumindest zwei verschiedenen Bildpunkten bestimmt.

Hierbei spiegelt das verwendete Rauschmaß das charakteristische Verhalten von zumindest zwei getrennten Bildpunkten wider. Dies ermöglicht eine einfache Aufdeckung von Kreuzkorrelationen. Beispielsweise kann als Rauschmaß hier der Mittelwert der Betragsdifferenz zwischen zeitgleichen Grauwerten der zwei Bildpunkte verwendet werden. Wenn dieses Rauschmaß trotz einer vorhandenen Grundhelligkeit kleiner oder gleich dem Dunkelrauschen ist, sind die Bildpunkte nicht unabhängig voneinander, d.h. es besteht eine fehlerhafte Kopplung.

In einer weiteren Ausgestaltung wird das aktuelle Rauschmaß von dem Verhältnis der Grauwerte von räumlich benachbarten Bildpunkten gebildet.

Hier wird die Suche nach fehlerhaften Kopplungen gezielt auf Bildpunkte konzentriert, bei denen eine Kopplung mit gewisser Wahrscheinlichkeit auftreten kann. Bevorzugt werden die Bildpunkte einer Zeile, einer Spalte und/oder innerhalb eines zusammenhängenden Teilgebiets (Cluster) überprüft. Durch die Maßnahme läßt sich der Datenverarbeitungsaufwand reduzieren und die Durchführung des Verfahrens beschleunigen.

In einer weiteren Ausgestaltung werden das aktuelle Rauschmaß und das Referenzrauschmaß in bezug auf einzelne Bildpunkte miteinander verglichen.

In dieser Ausgestaltung der Erfindung wird der Bildsensor Bildpunkt-genau überprüft, was die Aufdeckung geringster Fehler ermöglicht. Dies gewährleistet eine besonders hohe Funktionssicherheit des Bildsensors.

In einer anderen Ausgestaltung werden das aktuelle Rauschmaß und das Referenzrauschmaß in bezug auf Gruppen von Bildpunkten miteinander verglichen.

Dies ermöglicht eine Reduktion des Verarbeitungsaufwandes und eine beschleunigte Durchführung des Verfahrens. Im Gegensatz zu der zuvor genannten Alternative wird der Bildsensor hierbei jedoch nicht mehr für jeden Bildpunkt einzeln, sondern nur noch bereichsweise überprüft.

In einer weiteren Ausgestaltung wird ferner ein mittlerer Grauwert von dem zumindest einen lichtempfindlichen Bildpunkt bestimmt und der Schritt des Vergleichens wird in Abhängigkeit von dem mittleren Grauwert durchgeführt.

Hierdurch wird der Verarbeitungsaufwand reduziert, da die Durchführung des Verfahrens auf jeweils diejenigen Bildpunkte konzentriert wird, bei denen eine zuverlässige Aussage auf der Basis des Photonenrauschens möglich ist.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1 eine schematische Darstellung einer erfindungsgemäßen Vorrichtung in Form einer elektronischen Kamera,

Fig. 2 eine schematische Darstellung der Abhängigkeit des Rauschverhaltens eines einzelnen Bildpunktes von der einfallenden Lichtintensität,

Fig. 3 ein Flußdiagramm zur Erläuterung eines ersten Ausführungsbeispiels des erfindungsgemäßen Verfahrens,

Fig. 4 ein Flußdiagramm zur Erläuterung eines zweiten Ausführungsbeispiels des erfindungsgemäßen Verfahrens, und

Fig. 5 ein Flußdiagramm zur Erläuterung eines dritten Ausführungsbeispiels des erfindungsgemäßen Verfahrens.

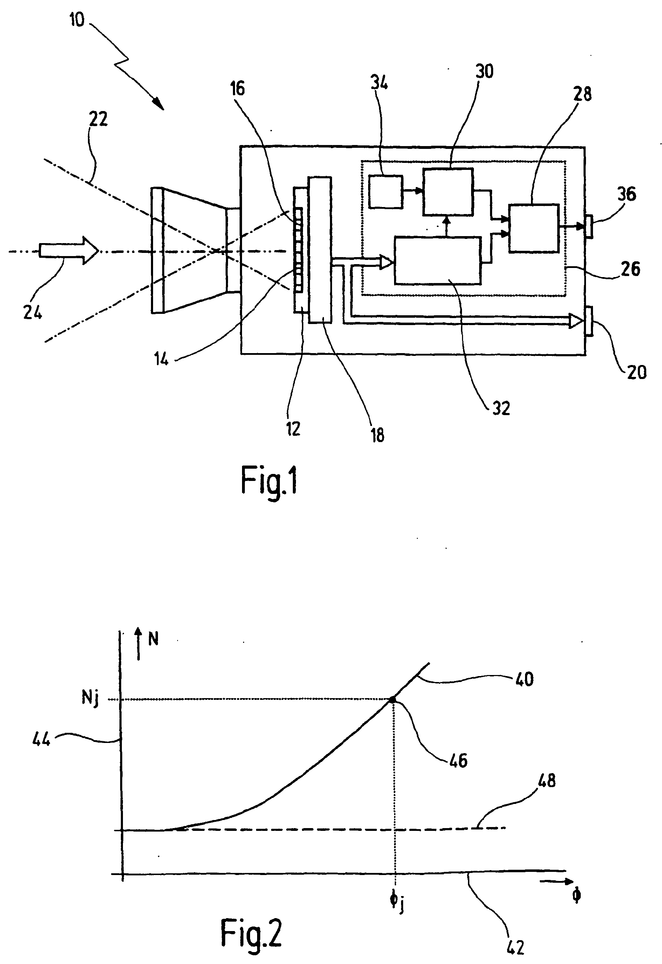

In Fig. 1 ist eine erfindungsgemäße Vorrichtung in Form einer elektronischen Kamera in ihrer Gesamtheit mit der Bezugsziffer 10 bezeichnet.

Die Kamera 10 besitzt einen Bildsensor 12 mit einer Vielzahl von einzelnen Bildpunkten 14, 16. Die Bildpunkte 14, 16 sind matrixartig, bei kleineren Bildsensoren manchmal auch linienförmig, zueinander angeordnet und bilden gemeinsam die lichtsensitive Fläche des Bildsensors 12.

Mit der Bezugsziffer 18 ist eine Ausgabeeinheit bezeichnet, die Grauwerte des von den Bildpunkten 14, 16 aufgenommenen Lichts zum Auslesen bereitstellt. Der Begriff "Grauwerte" hat sich dabei zur Bezeichnung dieser Werte eingebürgert. Er schließt jedoch nicht aus, daß der Bildsensor auch eine Farbinformation liefert, die in diesen Werten codiert ist.

Die Grauwerte werden hier als digitale Zahlenwerte über einen Anschluß 20 an eine nachfolgende Bildverarbeitungseinheit weitergegeben. Alternativ kann die nachfolgende Bildverarbeitungseinheit auch in das Gehäuse der Kamera 10 integriert sein, was insbesondere bevorzugt ist, wenn die Kamera 10 in einer Schutzvorrichtung zum Absichern eines Gefahrenbereichs verwendet wird.

Der Bildsensor 12 ist bevorzugt ein CMOS-Bildsensor mit einer linearen Kennlinie. Die Erfindung ist hierauf jedoch nicht beschränkt und ebenso bei anderen Bildsensoren anwendbar.

Mit der Bezugsziffer 22 ist ein schematisch angedeuteter Strahlengang bezeichnet, unter dem Licht 24 auf den Bildsensor 12 auftrifft.

Mit der Bezugsziffer 26 ist eine Überwachungseinheit zum Überprüfen der Funktionssicherheit der Kamera 10 und insbesondere des Bildsensors 12 bezeichnet. In einem bevorzugten Ausführungsbeispiel ist die Überwachungseinheit 26 mit einem Mikroprozessor realisiert, auf dem das erfindungsgemäße Verfahren in Form von Programmschritten durchgeführt wird. In diesem Ausführungsbeispiel besitzt die Überwachungseinheit 26 einen Speicher (hier nicht dargestellt), in dem die einzelnen Programmschritte in an sich bekannter Weise abgespeichert sind.

In der hier dargestellten strukturellen Aufgliederung beinhaltet die Überwachungseinheit 26 einen Vergleicher 28. Der Vergleicher 28 ist einerseits mit einem Speicher 30 verbunden, in dem Dunkelrauschmaße der einzelnen Bildpunkte 14, 16 als Referenzwerte abgespeichert sind. Die Dunkelrauschmaße der Bildpunkte 14, 16 werden beim Kalibrieren der Kamera 10 bestimmt und in dem Speicher 30 abgelegt.

Des weiteren ist der Vergleicher 28 mit einem Rauschbestimmungsteil 32 verbunden, in dem zu jedem Bildpunkt 14, 16 ein aktuelles Rauschmaß der Grauwerte bestimmt werden kann. Der Vergleicher 28 vergleicht in der nachfolgend noch näher erläuterten Weise ein aktuell bestimmtes Rauschmaß mit einem entsprechenden Dunkelrauschmaß.

Mit der Bezugsziffer 34 ist ein Temperatursensor bezeichnet, dessen Ausgangssignal dem Speicher 30 zugeführt ist. Hierdurch ist es möglich, das zum Vergleich herangezogene Dunkelrauschmaß in Abhängigkeit von der jeweiligen Umgebungstemperatur auszuwählen.

Der Speicher 30 ist im vorliegenden Ausführungsbeispiel direkt mit dem Rauschbestimmungsteil 32 verbunden. Hierdurch können die Dunkelrauschmaße sehr einfach auf dieselbe Weise bestimmt werden, wie die im Betrieb der Kamera 10 verwendeten aktuellen Rauschmaße.

Das Ergebnis des Vergleichs der beiden genannten Rauschmaße wird am Ausgang des Vergleichers 28 bereitgestellt. Im vorliegenden Ausführungsbeispiel erzeugt der Vergleicher 28 ein Fehlersignal, das über einen Anschluß 36 nach außen geführt ist.

In Fig. 2 ist mit der Bezugsziffer 40 eine Kennlinie bezeichnet, die das Rauschverhalten eines einzelnen Bildpunktes 14, 16 in Abhängigkeit von der Lichtintensität darstellt. Dementsprechend ist auf der Abszisse 42 die Intensität $\Phi$ des einfallenden Lichts 24 und auf der Ordinate 44 der Rauschpegel N aufgetragen. Beispielhaft besitzt ein Punkt 46 auf der Kennlinie 40 die Koordinaten ($\Phi_j$, $N_j$).

Mit der Bezugsziffer 48 ist derjenige Rauschanteil dargestellt, der von der Intensität des einfallenden Lichts unabhängig ist. Dieser Rauschanteil ist vor allem auf das Dunkelrauschen zurückzuführen. Der Anstieg der Kennlinie 40 mit zunehmender Lichtintensität $\Phi$ zeigt demgegenüber das Photonenrauschen.

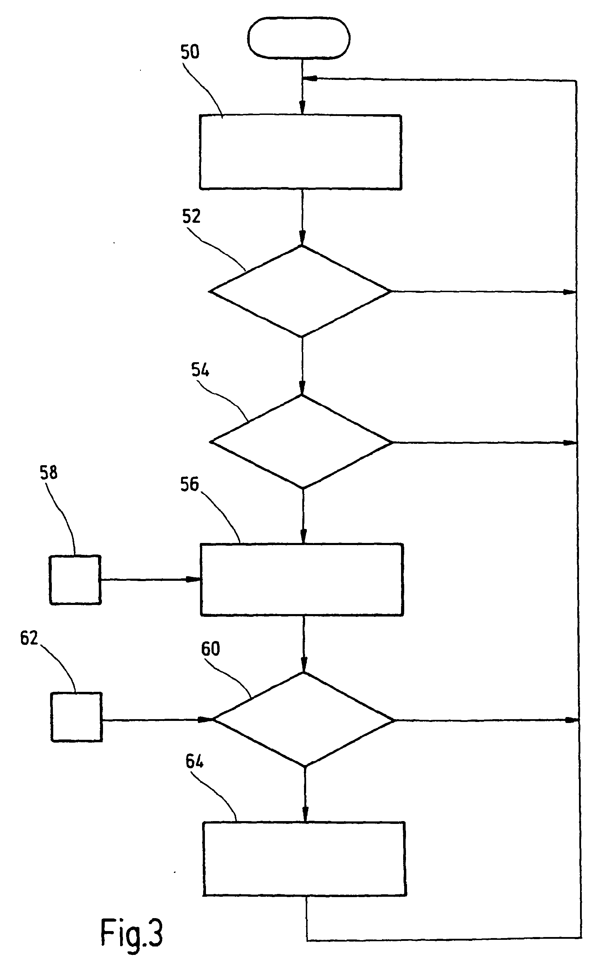

In Fig. 3 ist ein Flußdiagramm für ein Verfahren dargestellt, mit dem sogenannte "Stuck at"-Fehler in einzelnen Bildpunkten 14, 16 aufgedeckt werden können. Das Verfahren beginnt im Schritt 50 mit dem Einlesen eines Grauwertes $x_j$ für den zu überprüfenden Bildpunkt. Daran anschließend wird in Schritt 52 überprüft, ob der eingelesene Grauwert $x_j$ eine Signaldynamik erkennen läßt. Eine Signaldynamik liegt insbesondere dann vor, wenn sich der Grauwert $x_j$ um mehr als eine vorbestimmte Differenz von dem oder den vorhergehenden Grauwerten $x_{j-k}$ unterscheidet. Dies kann beispielsweise aufgrund von Bewegungen in dem überwachten Raumbereich geschehen. Wird eine Signaldynamik erkannt, kann ein "Stuck at"-Fehler von vornherein ausgeschlossen werden, weshalb das Verfahren zu Schritt 50 zurückkehrt.

Wird keine Signaldynamik erkannt, was vor allem bei statischen Verhältnissen im überwachten Raumbereich der Fall ist, wird in Schritt 54 überprüft, ob der mittlere Grauwert $\bar{x}$ des Bildpunktes eine ausreichende Grundhelligkeit aufweist ( $> \bar{x}_t$). Liegt der mittlere Grauwert $\bar{x}$ des überprüften Bildpunktes unterhalb einer festgelegten Grundhelligkeit $x_t$, ist der Anteil des Photonenrauschens am gesamten Rauschpegel zu gering ist, um mit diesem Verfahren eine zuverlässige Aussage über die Funktionsfähigkeit des Bildpunktes zu erhalten. Dementsprechend kehrt das Verfahren in diesem Fall zu Schritt 50 zurück. Bei mehrfacher Wiederholung dieses Ergebnisses kann auch ein Fehlersignal erzeugt werden (nicht dargestellt).

Liegt die Grundhelligkeit $\bar{x}$ der Grauwerte des überprüften Bildpunktes oberhalb der genannten Schwelle $x_t$, wird in Schritt 56 ein aktuelles Rauschmaß bestimmt. Gemäß Schritt 58 wird dabei in diesem Ausführungsbeispiel auch die Umgebungstemperatur $\vartheta$ berücksichtigt.

Bevorzugt wird das aktuelle Rauschmaß hier als Varianz oder als Standardabweichung (Wurzel aus der Varianz) durch eine statistische Auswertung gemäß der nachfolgenden Formel bestimmt:

$$\mathbf{x_{noise}} \;=\; \frac{1}{n} \sum_{j=1}^{n} \Big(x_j(\vartheta) - \bar{x}(\vartheta)\Big)^2$$

Dabei bezeichnen:

$x_j$    den aktuellen Grauwert,

$\bar{x}$    den Mittelwert aller berücksichtigten Grauwerte,

$n$    die Anzahl der Messungen, und

$\vartheta$    die Temperatur.

Alternativ kann das aktuelle Rauschmaß auch als durchschnittliche Abweichung des aktuellen Grauwertes von den vorausgegangenen Grauwerten bestimmt werden. In diesem Fall erfolgt die Bestimmung des Rauschmaßes nach folgender Formel:

$$\mathbf{x_{noise}} \;=\; \frac{1}{n-1} \sum_{j=2}^{n} \Big| x_j(\vartheta) - x_{j-1}(\vartheta) \Big|$$

Schließlich kann als aktuelles Rauschmaß auch die Differenz zwischen dem maximalen und minimalen Grauwert des überprüften Bildpunktes innerhalb eines Meßzyklus herangezogen werden. Dies ist eine sehr einfache Bestimmung eines Rauschmaßes. Bevorzugt sind jedoch die beiden zuvor genannten Alternativen, da sie eine zuverlässigere Überprüfung des Bildpunktes ermöglichen.

Im Schritt 60 wird das aktuell bestimmte Rauschmaß dann mit einem auf gleiche Weise bestimmten Dunkelrauschmaß $x_{dark}(\vartheta)$ verglichen, das gemäß Schritt 62 aus dem Speicher 30 der Kamera 10 ausgelesen wird. Ist das aktuell bestimmte Rauschmaß $x_{noise}$ größer als das zum Vergleich herangezogene Dunkelrauschmaß $x_{dark}$, ist die Funktion des überprüften Bildpunktes in Ordnung. Das Verfahren kehrt dementsprechend zu Schritt 50 zurück und es beginnt ein neuer Überprüfungszyklus.

Ist das Dunkelrauschmaß $x_{dark}$ größer als das aktuell bestimmte Rauschmaß $x_{noise}$, liegt ein "Stuck at"-Fehler vor und es folgt in Schritt 64 eine Fehlerbehandlungsroutine. Innerhalb der Fehlerbehandlungsroutine 64 kann beispielsweise ein Fehlersignal über den Anschluß 36 ausgegeben werden. Anschließend kehrt das Verfahren zum Schritt 50 zurück, um einen neuen Überprüfungszyklus für andere Bildpunkte zu beginnen.

Abweichend von dem dargestellten Verfahren ist es auch möglich, mehrere Bildpunkte zeitgleich zu überprüfen.

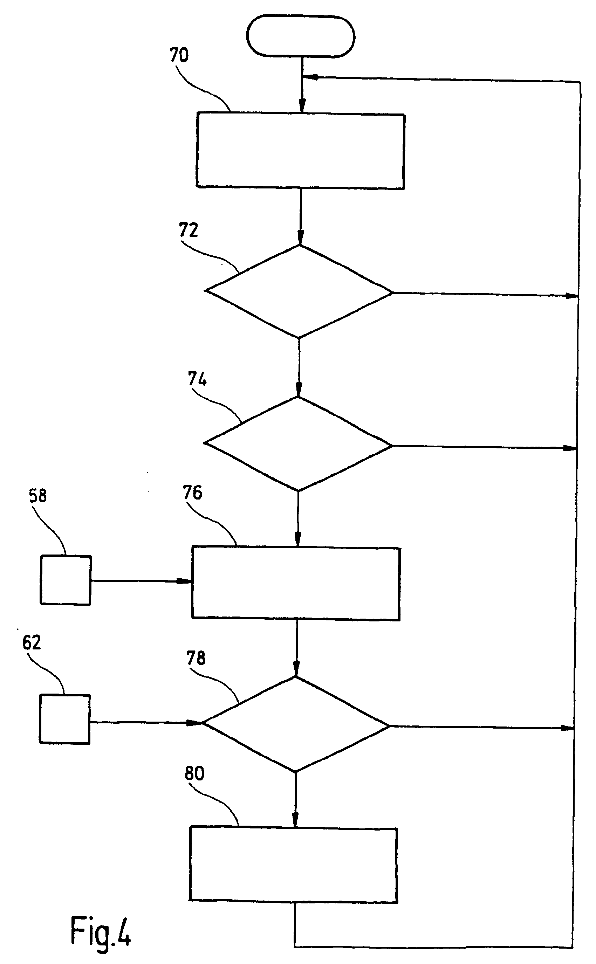

In Fig. 4 ist ein Ausführungsbeispiel eines Verfahrens dargestellt, mit dem Kopplungen zwischen zwei verschiedenen Bildpunkten festgestellt werden können. Gleich Bezugszeichen kennzeichnen dabei dieselben Elemente wie zuvor.

In Schritt 70 werden zunächst die Grauwerte $a_j$, $b_j$ der beiden miteinander zu vergleichenden Bildpunkte ausgelesen. Im Schritt 72 erfolgt dann ein Vergleich der beiden Grauwerte. Unterscheiden sich die beiden Grauwerte deutlich, was beispielsweise durch eine Hell-Dunkel-Struktur in dem aufgenommenen Bild verursacht sein kann, wird hier angenommen, daß keine Kopplung vorliegt. Das Verfahren kehrt dementsprechend zu Schritt 70 zurück.

Wird in Schritt 72 keine Struktur entdeckt, wird in Schritt 74 wiederum die Grundhelligkeit für die beiden Bildpunkte überprüft. Ist die Grundhelligkeit zu gering, kehrt das Verfahren zu Schritt 70 zurück, da eine zuverlässige Aussage dann nicht gewährleistet ist. Wiederholt sich dieses Ergebnis mehrfach, wird ein Fehlersignal erzeugt (nicht dargestellt).

Wird eine ausreichende Grundhelligkeit in Schritt 74 festgestellt, wird im Schritt 76 ein aktuelles Rauschmaß von dem Verhältnis der Grauwerte der beiden Bildpunkte bestimmt, und zwar nach folgender Formel:

$$\overline{\Lambda} = \frac{1}{n} \sum_{j=1}^{n} \left| a_j - b_j \right|$$

Darin bezeichnen:

$\overline{\Lambda}$ das Rauschmaß,

a den Grauwert des ersten Bildpunktes,

b den Grauwert des zweiten Bildpunktes, und

n die Anzahl der Meßzyklen.

Gemäß Schritt 58 wird dabei wiederum die Temperatur berücksichtigt. In Schritt 78 wird dann überprüft, ob das so bestimmte Rauschmaß $\overline{\Lambda}$ größer ist als das im Speicher 30 für die entsprechende Temperatur abgespeicherte Dunkelrauschmaß $\overline{\Lambda}_{dark}$. Ist das Dunkelrauschmaß $\overline{\Lambda}_{dark}$ kleiner, wird angenommen, daß zwischen den beiden Bildpunkten keine Kopplung vorliegt. Ist die mittlere Abweichung $\overline{\Lambda}$ der beiden Bildpunkte jedoch kleiner oder gleich dem Dunkelrauschmaß $\overline{\Lambda}_{dark}$, muß von einer Kopplung der beiden Bildpunkte ausgegangen werden. Dementsprechend wird in Schritt 80 eine Fehlerroutine eingeleitet.

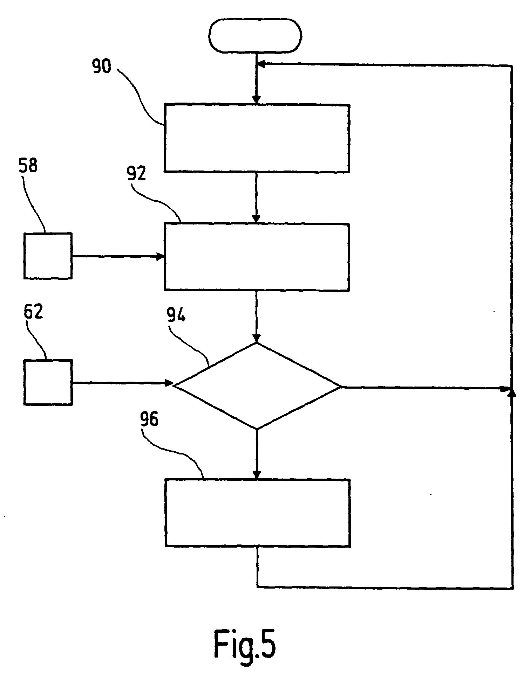

In Fig. 5 ist ein weiteres Ausführungsbeispiel für ein Verfahren zum Aufdecken von Kopplungen dargestellt. Dieses Ausführungsbeispiel wird aus heutiger Sicht bevorzugt, da im Gegensatz zu dem Verfahren gemäß Fig. 4 keine Verfälschung eintritt, wenn die Grauwerte der miteinander verglichenen Bildpunkte sich aufgrund einer Struktur signifikant voneinander unterscheiden. Im Schritt 90 werden zunächst wiederum die Grauwerte $a_j$ und $b_j$ der beiden Bildpunkte ausgelesen. Anschließend wird in Schritt 92 ein aktuelles Rauschmaß nach folgender Formel bestimmt:

$$\overline{U} = \left( \frac{1}{n-1} \sum_{j=2}^{n} \left| \frac{a_{j-1}}{b_{j-1}} - \frac{a_j}{b_j} \right| \right) \times \sum_{j=1}^{n} b_j \bigg/ \sum_{j=1}^{n} a_j$$

Darin bezeichnen:

$\overline{U}$ das aktuelle Rauschmaß,

a die Grauwerte des ersten Bildpunktes,

b die Grauwerte des zweiten Bildpunktes, und

n die Anzahl der Meßzyklen.

In Schritt 94 wird das Rauschmaß $\overline{U}$ mit einem Dunkelrauschmaß $\overline{U}_{dark}$ verglichen, welches nach derselben Formel wie oben, jedoch bei Dunkelheit bestimmt wurde. Wenn das aktuelle Rauschmaß $\overline{U}$ größer ist als das abgespeicherte Dunkelrauschmaß, liegt keine Kopplung zwischen den beiden Bildpunkten vor. Andernfalls folgt gemäß Schritt 96 wiederum eine Fehlerroutine.

Der Vorteil des Verfahrens gemäß Fig. 5 liegt darin, daß die Kopplungen der jeweiligen Grauwerte zwischen zwei Bildpunkten durch eine additive oder multiplikative Konstante beeinflußt sein können, da hier nur geprüft wird, ob die statistische zeitliche Schwankung der Grauwerte unabhängig voneinander ist.

Es gibt kommerziell erhältliche Bildsensoren, bei denen die am äußeren Rand gelegenen Bildpunkte so angeordnet sind, daß konstruktionsbedingt kein Licht darauf fallen kann. Diese Randbildpunkte liefern somit von sich aus stets Signale, die einem Dunkelwert entsprechen. In einem bevorzugten Ausführungsbeispiel wird in der erfindungsgemäßen Kamera ein derartiger Bildsensor verwendet, und das als Referenz herangezogene Dunkelrauschmaß wird aus den Grauwerten der abgedunkelten Bildpunkte am Rand bestimmt. Alternativ können die am Rand eines Bildsensors gelegenen Bildpunkte auch durch geeignete Anordnung in der Kamera abgedunkelt werden, um so die benötigten Referenzwerte einfach bestimmen zu können.

In einem weiteren Ausführungsbeispiel wird folgende Formel zur Bestimmung des Rauschmaßes verwendet:

$$\mathbf{x_{noise}} \;=\; \frac{1}{n}\sum_{j=1}^{n}\left|y_j - x_j\right|$$

Dabei bezeichnen:

$x_j$    Grauwert des Bildpunktes j aus dem aktuellen Bild,

$y_j$    Grauwert des Bildpunktes j aus dem vorhergehenden Bild,

$n$    die Anzahl der Bildpunkte.

In diesem Ausführungsbeispiel wird für jeden Bildpunkt die Betragsdifferenz der Grauwerte aus zwei aufeinanderfolgenden Bildern bestimmt. Anschließend wird eine mittlere Betragsdifferenz über alle Bildpunkte hinweg gebildet. Alternativ könnte man hier auch die Standardabweichung oder die Varianz verwenden. Als Referenzrauschmaß wird ein Dunkelrauschmaß verwendet, das auf dieselbe Weise aus zwei aufeinanderfolgenden Dunkelbildern bestimmt wird. Die beiden Rauschmaße werden hier also aus einer Vielzahl von Bildpunkten eines Differenzbildes bestimmt. Bei einem fehlerfreien Bildsensor muß das aktuelle Rauschmaß das Dunkelrauschmaß übersteigen, sofern eine gewisse Grundhelligkeit vorhanden ist. Ist das aktuelle Rauschmaß kleiner als das Dunkelrauschmaß, liefert der Bildsensor offensichtlich ein "eingefrorenes Bild", d.h. er reagiert nicht mehr auf Veränderungen des aktuell einfallenden Lichts.

Bewegungen und Motivänderungen in den aufeinanderfolgenden Bildern erhöhen das aktuelle Rauschmaß gegenüber dem Dunkelrauschmaß, was dann jedoch ebenfalls auf einen funktionierenden Bildsensor hindeutet.

Bei diesem Ausführungsbeispiel kann zwar keine Aussage zu der individuellen Funktionsfähigkeit der einzelnen Bildpunkte gemacht werden. Statt dessen liefert dieses Ausführungsbeispiel jedoch eine sehr einfache und schnelle qualitative Aussage über die Funktionsfähigkeit des Bildsensors.

**Patentansprüche**

1.  Verfahren zum Überprüfen der Funktionssicherheit eines Bildsensors (12), der eine Vielzahl von lichtempfindlichen Bildpunkten (14, 16) aufweist, wobei Grauwerte von zumindest einem lichtempfindlichen Bildpunkt (14, 16) ausgelesen werden, mit den Schritten:

    - Bestimmen (32; 56; 76; 92) eines aktuellen Rauschmaßes ($x_{noise}$; $\overline{\Lambda}$; $\overline{U}$) der Grauwerte des zumindest einen Bildpunktes (14, 16),
    - Bereitstellen (30; 62) eines Referenzrauschmaßes ($x_{dark}$; $\overline{\Lambda}_{dark}$; $\overline{U}_{dark}$) für den zumindest einen Bildpunkt (14, 16), und
    - Vergleichen (28; 60; 78; 94) des aktuellen Rauschmaßes und des Referenzrauschmaßes,
    - wobei das aktuelle Rauschmaß ($x_{noise}$; $\overline{\Lambda}$; $\overline{U}$) so bestimmt wird, dass es sich in Abhängigkeit von einer Lichtintensität ($\phi$) verändert,
    - wobei das Referenzrauschmaß ein Dunkelrauschmaß ($x_{dark}$; $\overline{\Lambda}_{dark}$; $\overline{U}_{dark}$) ist, und
    - wobei ein Funktionsfehler angenommen wird (36; 64; 80; 96), wenn das aktuelle Rauschmaß das Dunkel-

rauschmaß ($x_{dark}$;$\overline{\Lambda}_{dark}$;$\overline{U}_{dark}$) trotz einer vorhandenen Grundhelligkeit nicht übersteigt.

2. Verfahren nach Anspruch 1, **dadurch gekennzeichnet, dass** das aktuelle Rauschmaß ($x_{noise}$; $\overline{\Lambda}$ ; $\overline{U}$) durch eine statistische Auswertung (56; 76; 92) einer Mehrzahl ausgelesener Grauwerte bestimmt wird.

3. Verfahren nach Anspruch 1 oder 2, **dadurch gekennzeichnet, dass** das aktuelle Rauschmaß ($x_{noise}$); $\overline{\Lambda}$; $\overline{U}$) und das Referenzrauschmaß ($x_{dark}$; $\overline{\Lambda}_{dark}$ ; $\overline{U}_{dark}$) auf jeweils gleiche Weise (56; 76; 92) bestimmt werden.

4. Verfahren nach einem der Ansprüche 1 bis 3, **dadurch gekennzeichnet, dass** das aktuelle Rauschmaß ($x_{noise}$; $\overline{\Lambda}$;$\overline{U}$) und das Referenzrauschmaß ($x_{dark}$; $\overline{\Lambda}_{dark}$; $\overline{U}_{dark}$) in Abhängigkeit von einer aktuellen Umgebungstemperatur (58, 62) miteinander verglichen werden.

5. Verfahren nach einem der Ansprüche 1 bis 4, **dadurch gekennzeichnet, dass** das aktuelle Rauschmaß ($x_{noise}$) für den zumindest einen Bildpunkt (14, 16) als Absolutwert (56) bestimmt wird.

6. Verfahren nach einem der Ansprüche 1 bis 5, **dadurch gekennzeichnet, dass** das aktuelle Rauschmaß ($x_{noise}$) und das Referenzrauschmaß ($x_{dark}$) in Bezug auf jeweils identische Bildpunkte miteinander verglichen werden (60).

7. Verfahren nach einem der Ansprüche 1 bis 6, **dadurch gekennzeichnet, dass** das aktuelle Rauschmaß ($\overline{\Lambda}$ ; $\overline{U}$) von einem Verhältnis der Grauwerte von zumindest zwei verschiedenen Bildpunkten (76; 92) bestimmt wird.

8. Verfahren nach Anspruch 7, **dadurch gekennzeichnet, dass** das aktuelle Rauschmaß ($\overline{\Lambda}$ ; $\overline{U}$) von dem Verhältnis der Grauwerte von räumlich benachbarten Bildpunkten (14, 16) gebildet wird.

9. Verfahren nach einem der Ansprüche 1 bis 8, **dadurch gekennzeichnet, dass** das aktuelle Rauschmaß ($x_{noise}$ ; $\overline{\Lambda}$ ; $\overline{U}$) und das Referenzrauschmaß ($x_{dark}$; $\overline{\Lambda}_{dark}$ ; $\overline{U}_{dark}$) in Bezug auf einzelne Bildpunkte (14, 16) miteinander verglichen werden.

10. Verfahren nach einem der Ansprüche 1 bis 8, **dadurch gekennzeichnet, dass** das aktuelle Rauschmaß ($x_{noise}$; $\overline{\Lambda}$; $\overline{U}$) und das Referenzrauschmaß ($x_{dark}$; $\overline{\Lambda}_{dark}$; $\overline{U}_{dark}$) in Bezug auf Gruppen von Bildpunkten (14, 16) miteinander verglichen werden.

11. Verfahren nach einem der Ansprüche 1 bis 10, **dadurch gekennzeichnet, dass** ferner ein mittlerer Grauwert ($\overline{x}$) von dem zumindest einen lichtempfindlichen Bildpunkt (14, 16) bestimmt wird (54; 74) und dass der Schritt des Vergleichens in Abhängigkeit von dem mittleren Grauwert durchgeführt wird.

12. Vorrichtung, insbesondere elektronische Kamera, mit einem Bildsensor (12), der eine Vielzahl von lichtempfindlichen Bildpunkten (14, 16) aufweist, ferner mit einer Ausgabeeinheit (18), die Grauwerte der lichtempfindlichen Bildpunkte (14, 16) zum Auslesen bereitstellt, und mit einer Überwachungseinheit (26) zum Überprüfen der Funktionssicherheit des Bildsensors (12), wobei die Überwachungseinheit (26) zumindest einen Speicher (30) beinhaltet, in dem zumindest ein Dunkelrauschmaß ($x_{dark}$; $\overline{\Lambda}_{dark}$; $\overline{U}_{dark}$) für zumindest einen Bildpunkt als Referenzrauschmaß abgespeichert ist und wobei die Überwachungseinheit (26) einen Rauschbestimmungsteil (32) sowie einen Vergleicher (28) aufweist, wobei mit dem Rauschbestimmungsteil (32) ein aktuelles Rauschmaß ($x_{noise}$; $\overline{\Lambda}$; $\overline{U}$) der Grauwerte des zumindest einen Bildpunktes (14, 16) so bestimmbar ist, dass es sich in Abhängigkeit von einer Lichtintensität ($\phi$) verändert, wobei mit dem Vergleicher (28) das aktuelle Rauschmaß und das Dunkelrauschmaß vergleichbar sind, und wobei ein Funktionsfehler angenommen wird, wenn das aktuelle Rauschmaß das Dunkelrauschmaß ($x_{dark}$ ; $\overline{\Lambda}_{dark}$; $\overline{U}_{dark}$) trotz einer vorhandenen Grundhelligkeit nicht übersteigt.

13. Mikroprozessorprogramm mit Programmcodemitteln, um alle Schritte eines Verfahrens nach einem der Ansprüche 1 bis 11 durchzuführen, wenn das Programm auf einem Mikroprozessor ausgeführt wird.

14. Mikroprozessorprogrammprodukt mit einem Datenträger, auf dem ein Mikroprozessorprogramm nach Anspruch 13 gespeichert ist.

**Claims**

1. Method for checking the functional reliability of an image sensor (12) having a plurality of light-sensitive pixels (14, 16), wherein grey-scale values of at least one light-sensitive pixel (14, 16) are read out, the method having the following steps:

- determining (32; 56; 76; 92) a present noise factor ($x_{noise}$; $\overline{\Lambda}$; $\overline{U}$) of the grey-scale values of the at least one pixel (14, 16),
- providing (30; 62) a reference noise factor ($x_{dark}$; $\overline{\Lambda}_{dark}$; $\overline{U}_{dark}$) f or the at least one pixel (14, 16), and
- comparing (28; 60; 78; 94) the present noise factor and the reference noise factor,
- wherein the present noise factor ($x_{noise}$; $\overline{\Lambda}$; $\overline{U}$) is determined such that it varies in a manner dependent on a light intensity ($\phi$),
- wherein the reference noise factor is a dark noise factor ($x_{dark}$; $\overline{\Lambda}_{dark}$; $\overline{U}_{dark}$), and
- wherein a functional error is assumed (36; 64; 80; 96) if the present noise factor does not exceed the dark noise factor ($x_{dark}$; $\overline{\Lambda}_{dark}$; $\overline{U}_{dark}$) despite a background brightness that is present.

2. Method according to Claim 1, **characterized in that** the present noise factor ($x_{noise}$; $\overline{\Lambda}$; $\overline{U}$) is determined by a statistical evaluation (56; 76; 92) of a plurality of read-out grey-scale values.

3. Method according to Claim 1 or 2, **characterized in that** the present noise factor ($x_{noise}$; $\overline{\Lambda}$; $\overline{U}$) and the reference noise factor ($x_{dark}$; $\overline{\Lambda}_{dark}$; $\overline{U}_{dark}$) are determined in a respectively identical manner (56; 76; 92).

4. Method according to anyone of Claims 1 to 3, **characterized in that** the present noise factor ($x_{noise}$; $\overline{\Lambda}$; $\overline{U}$) and the reference noise factor ($x_{dark}$; $\overline{\Lambda}_{dark}$; $\overline{U}_{dark}$) are compared with one another in a manner dependent on a present ambient temperature range (58, 62).

5. Method according to anyone of Claims 1 to 4, **characterized in that** the present noise factor ($x_{noise}$) for the at least one pixel (14, 16) is determined as an absolute value (56).

6. Method according to anyone of Claims 1 to 5, **characterized in that** the present noise factor ($x_{noise}$) and the reference noise factor ($x_{dark}$) are compared (60) with one another with regard to respectively identical pixels.

7. Method according to anyone of Claims 1 to 6, **characterized in that** the present noise factor ($\overline{\Lambda}$; $\overline{U}$) is determined from a ratio of the grey-scale values of at least two different pixels (76; 92).

8. Method according to Claim 7, **characterized in that** the present noise factor ($\overline{\Lambda}$; $\overline{U}$) is determined from the ratio of the grey-scale values of spatially adjacent pixels (14, 16).

9. Method according to anyone of Claims 1 to 8, **characterized in that** the present noise factor ($x_{noise}$; $\overline{\Lambda}$; $\overline{U}$) and the reference noise factor ($x_{dark}$; $\overline{\Lambda}_{dark}$; $\overline{U}_{dark}$) are compared with one another with regard to individual pixels (14, 16).

10. Method according to anyone of Claims 1 to 8, **characterized in that** the present noise factor ($x_{noise}$; $\overline{\Lambda}$; $\overline{U}$) and the reference noise factor ($x_{dark}$; $\overline{\Lambda}_{daerk}$; $\overline{U}_{dark}$) are compared with one another with regard to groups of pixels (14, 16).

11. Method according to anyone of Claims 1 to 10, **characterized in that** an average grey-scale value ($\overline{x}$) of the at least one light-sensitive pixel (14, 16) is determined (54; 74) and **in that** the comparison step is carried out in a manner dependent on the average grey-scale value.

12. Apparatus, in particular electronic camera, having an image sensor (12), which has a plurality of light-sensitive pixels (14, 16), further having an output unit (18), which provides grey-scale values of the light-sensitive pixels (14, 16) for read-out, and having a monitoring unit (26) for checking the functional reliability of the image sensor (12), the monitoring unit (26) comprising at least one memory (30), in which at least one dark noise factor ($x_{dark}$; $\overline{\Lambda}_{dark}$; $\overline{U}_{dark}$) for at least one pixel is stored as a reference noise factor, and the monitoring unit (26) having a noise determining part (32) and a comparator (28), wherein the noise determining part (32) is capable of determining a present noise factor ($x_{noise}$; $\overline{\Lambda}$; $\overline{U}$) of the grey-scale values of the at least one pixel (14, 16) such that it varies in a manner dependent on a light intensity ($\phi$), wherein the comparator (28) is capable of comparing the present noise factor and the dark noise factor, and wherein a functional error is assumed if the present noise factor does not exceed the dark noise factor ($x_{dark}$; $\overline{\Lambda}_{dark}$; $\overline{U}_{dark}$) despite a background brightness that is present.

13. Microprocessor program having program code means for carrying out all the steps of a method according to anyone of Claims 1 to 11 if the program is executed on a microprocessor.

**14.** Microprocessor program product having a data carrier on which a microprocessor program according to Claim 13 is stored.

**Revendications**

**1.** Procédé destiné à vérifier la sécurité fonctionnelle d'un capteur d'images (12) qui comporte une pluralité de pixels photosensibles (14, 16), des valeurs de gris d'au moins un pixel photosensible (14, 16) étant lues, avec les étapes :

- détermination (32 ; 56 ; 76 ; 92) d'un facteur de bruit actuel ($x_{noise}$ ; $\overline{\Lambda}$ ; $\overline{U}$) des valeurs de gris de l'au moins un pixel (14, 16) ;
- mise à disposition (30 ; 62) d'un facteur de bruit de référence ($x_{dark}$ ; $\overline{\Lambda}_{dark}$ ; $\overline{U}_{dark}$) pour l'au moins un pixel (14, 16), et
- comparaison (28 ; 60 ; 78 ; 94) du facteur de bruit actuel et du facteur de bruit de référence,
- le facteur de bruit actuel ($x_{noise}$ ; $\overline{\Lambda}$ ; $\overline{U}$) étant déterminé de façon telle qu'il se modifie en fonction d'une intensité lumineuse ($\phi$)
- le facteur de bruit de référence étant un facteur de bruit sombre ($x_{dark}$ ; $\overline{\Lambda}_{dark}$ ; $\overline{U}_{dark}$) et
- un défaut fonctionnel étant relevé (36 ; 64 ; 80 ; 96) si le facteur de bruit actuel ne dépasse pas le facteur de bruit sombre ($x_{dark}$ ; $\overline{\Lambda}_{dark}$ ; $\overline{U}_{dark}$), malgré la présence d'une luminosité de fond.

**2.** Procédé selon la revendication 1, **caractérisé en ce que** le facteur de bruit actuel ($x_{noise}$ ; $\overline{\Lambda}$; $\overline{U}$) est déterminé par une évaluation statistique (56 ; 76 ; 92) d'une pluralité de valeurs de gris qui ont été lues.

**3.** Procédé selon la revendication 1 ou 2, **caractérisé en ce que** le facteur de bruit actuel ($x_{noise}$ ; $\overline{\Lambda}$; $\overline{U}$) et le facteur de bruit de référence ($x_{dark}$ ; $\overline{\Lambda}_{\textbf{dark}}$ ; $\overline{U}_{dark}$) sont déterminés de façon respectivement identique (56 ; 76 ; 92).

**4.** Procédé selon l'une quelconque des revendications 1 à 3, **caractérisé en ce que** le facteur de bruit actuel ($x_{noise}$ ; $\overline{\Lambda}$ ; $\overline{U}$) et le facteur de bruit de référence ($x_{dark}$ ; $\overline{\Lambda}_{dark}$ ; $\overline{U}_{dark}$) sont comparés entre eux en fonction d'une température ambiante actuelle (58, 62).

**5.** Procédé selon l'une quelconque des revendications 1 à 4, **caractérisé en ce que** le facteur de bruit actuel ($x_{noise}$) pour l'au moins un pixel (14, 16) est déterminé en tant que valeur absolue (56).

**6.** Procédé selon l'une quelconque des revendications 1 à 5, **caractérisé en ce que** le facteur de bruit actuel ($x_{noise}$) et le facteur de bruit de référence ($X_{dark}$) sont comparés (60) entre eux en référence à des pixels respectivement identiques.

**7.** Procédé selon l'une quelconque des revendications 1 à 6, **caractérisé en ce que** le facteur de bruit actuel ($\overline{\Lambda}$ ; $\overline{U}$) est déterminé à partir d'un rapport entre les valeurs de gris d'au moins deux différents pixels (76 ; 92).

**8.** Procédé selon la revendication 7, **caractérisé en ce que** le facteur de bruit actuel ($\overline{\Lambda}$ ; $\overline{U}$) est formé par le rapport des valeurs de gris entre des pixels voisins dans l'espace (14, 16).

**9.** Procédé selon l'une quelconque des revendications 1 à 8, **caractérisé en ce que** le facteur de bruit actuel ($x_{noise}$; $\overline{\Lambda}$; $\overline{U}$) et le facteur de bruit de référence ($x_{dark}$ ; $\overline{\Lambda}_{dark}$ ; $\overline{U}_{dark}$) sont comparés entre eux en référence à des pixels individuels (14, 16).

**10.** Procédé selon l'une quelconque des revendications 1 à 8, **caractérisé en ce que** le facteur de bruit actuel ($x_{noise}$ ; $\overline{\Lambda}$ : $\overline{U}$) et le facteur de bruit de référence ($x_{dark}$ ; $\overline{\Lambda}_{dark}$ ; $\overline{U}_{dark}$) sont comparés entre eux en référence à des groupes de pixels (14, 16).

**11.** Procédé selon l'une quelconque des revendications 1 à 10, **caractérisé en ce que** par ailleurs une valeur moyenne de gris ($\overline{x}$) de l'au moins un pixel photosensible (14, 16) est déterminée (54 ; 74) et **en ce que** l'étape de comparaison est réalisée en fonction de la valeur moyenne de gris.

**12.** Dispositif, notamment caméra électronique avec un capteur d'images (12) qui comporte une pluralité de pixels photosensibles (14, 16), par ailleurs avec une unité d'édition (18), qui met à disposition des valeurs de gris des pixels photosensibles (14, 16) destinés à la lecture et avec une unité de supervision (26) pour la vérification de la sécurité fonctionnelle du capteur d'images (12), l'unité de supervision (26) contenant au moins une mémoire (30), dans laquelle au moins un facteur de bruit sombre ($x_{dark}$ ; $\overline{\Lambda}_{dark}$ ; $\overline{U}_{dark}$) pour au moins un pixel est sauvegardé en tant que facteur de bruit de référence et l'unité de supervision (26) comportant un élément de détermination du bruit (32), ainsi qu'un comparateur (28), l'élément de détermination du bruit (32) servant à déterminer un facteur de bruit actuel ($x_{noise}$; $\overline{\Lambda}$; $\overline{U}$) des valeurs de gris de l'au moins un pixel (14, 16) de façon telle, qu'il se modifie en fonction d'une intensité lumineuse ($\phi$), le comparateur (28) servant à comparer le facteur de bruit actuel et le facteur de bruit sombre et un défaut de fonctionnement étant relevé si le facteur de bruit actuel ne dépasse pas le facteur de bruit sombre ($x_{dark}$ ; $\overline{\Lambda}_{dark}$ ; $\overline{U}_{dark}$), malgré la présence d'une luminosité de base.

13. Programme pour microprocesseur avec des moyens de code programme, pour réaliser toutes les étapes d'un procédé selon l'une quelconque des revendications 1 à 11 lorsque le programme est exécuté sur un microprocesseur.

14. Produit de programme pour microprocesseur avec un support de données sur lequel est mémorisé un programme pour microprocesseur selon la revendication 13.

Fig.1

Fig.2

Fig.3

EP 1 472 890 B1

Fig.4

15

Fig.5